(19) Europäisches Patentamt
European Patent Office
Office européen des brevets

(11) **EP 3 006 104 A1**

(12) **EUROPEAN PATENT APPLICATION**

(43) Date of publication:
**13.04.2016 Bulletin 2016/15**

(51) Int Cl.:
***B01J 20/22*** *(2006.01)*     ***B01J 20/30*** *(2006.01)*

(21) Application number: **15165723.6**

(22) Date of filing: **29.04.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **06.10.2014 EP 14187693**

(71) Applicant: **Paul Scherrer Institut
5232 Villigen (CH)**

(72) Inventors:
• **Ranocchiari, Marco**
  **4310 Rheinfelden (CH)**
• **Van Bokhoven, Jeroen A.**
  **8004 Zürich (CH)**

(74) Representative: **Fischer, Michael
Siemens AG
Postfach 22 16 34
80506 München (DE)**

(54) **METHOD FOR PRODUCING METAL OR COVALENT ORGANIC FRAMEWORKS**

(57) The present invention discloses a method for producing a metal organic framework or a covalent organic framework, comprising the steps of:

a) mixing precursor components (4, 6, 8) of the metal or covalent organic framework in order to achieve a reaction mixture;

b) conveying the reaction mixture continuously into a continuous flow reactor (16) having a reaction path (14);

c) heating the reaction mixture in the continuous flow reactor by (16) microwave irradiation (18) that is subjected to the reaction mixture along the reaction path (14) in order to induce the reaction of the precursor components (4, 6, 8) to the desired metal or covalent organic framework; and

d) continuously drawing the so-generated metal or covalent organic framework from the continuous flow reactor (16); and

e) separating the so-generated metal or covalent organic framework from unreacted remaining reaction mixture.

The method now yields rather low reaction times thereby offering high space-time yield which will enable the bigscale production of metal-organic frameworks as shown in the examples below.

FIG 1

MIXING UNIT
-Stock solution reservoirs
-High-pressure pumps
-Flow controllers (FC)
-Recycling line

MICROWAVE CHAMBER
-Microwave system
-Alternative flow reactor
-Static mixer (M)
-Pressure indicator (PI)
-X-rays compatible window

COLLECTION UNIT
-Temperature indicator (TI)
-Pressure release valve
-Continuous collecting unit
-Heat exchanger

**Description**

The present invention relates to a method for fast production and for producing large amounts of metal or covalent organic frameworks.

Metal-organic frameworks, also known as porous coordination polymers (PCPs), are porous crystalline materials with high surface areas synthesized from inorganic units, and functionalized organic building blocks like aromatic carboxylic acids [1]. Covalent organic frameworks (COFs) are the organic analogues where the metal is substituted by an organic or semi-metallic unit [2]. MOFs and COFs have been used in a variety of applications such as gas sorption, catalysis and medical applications [3].

The conventional methods for the synthesis of metal-organic frameworks (MOFs) under solvothermal or non-solvothermal conditions are time-consuming procedures with reaction times up to several days.

Materials covered by the technology are MOFs or COFs generally defined as solid materials formed by the combination of mono or multi dentate organic linkers of formula $R_xD_y$ ($x{\geq}1, y{\geq}1$) with inorganic unit, which are metal or metal clusters of formula $M_wL_z$ ($w{\geq}1, z{\geq}0$) to give 1,2, or 3 dimensional structures of formula $[R_xD_y M_yL_z]_n$ ($n{\geq}2$) where:

   R = organic group of formula $C_mH_oA$ where A is H or a functionalization of type amino, amido, cyano, nitro, aldehyde, urea, thiourea, ester, carbonate, alcohol, ether, halogen, phosphine derivative, phosphine oxide derivative, imidazolium, pyridino, triazole, imidazole, phosphate, phosphoric acid.

   D = donor group, which binds to the inorganic unit such as carboxylic acid, sulfonic acid, carboxylate, sulfonate, carbonyl, hydroxyl, hydroxylate, amino, ammonium, phosphino, phosphonium, pyridine and derivatives, imidazole and derivatives, phosphonate and derivatives, nitrile, boronic acid and esters

   M = nothing (the organic units are connected to each other such as in COFs), any metal in any oxidation state or any semi-metal or light element.

   L = ligand of type O, OH, CO, N, NO

The conventional synthesis is done by mixing the soluble metal component with the organic linker in a solvent. Self-assembly of the metal-organic frameworks occurs under heating within hours or days, where metal ions or metal-oxygen clusters are connected via the organic linkers to form a porous network.

Depending on the reactants, the resulting MOF can be a one-, two- or three-dimensional framework with microporous and/or mesoporous cavities. Even different isoreticular linkers can be used to synthesize MIXMOFs [4].

Their fields of application lie in adsorption, separation and catalysis. For example, pressure cylinders with MOF-5 pellets are capable of storing more propane gas than conventional ones.

Typical representatives metal-organic frameworks are MIL-101-$NH_2$(Al), HKUST-1, UiO-66 and UiO-66-$NH_2$. The MIL-101-$NH_2$(Al) framework consists of two types of mesoporous cages of different sizes consisting of hexagonal and pentagonal windows. As a result, it offers an excellent trade-off for $CO_2/CH_4$ separation. HKUST-1 ($Cu_3(BTC)_2$, BTC = 1,3,5-benzenetricarboxylic acid) is a microporous MOF and is currently one of the few MOFs produced in industry by BASF-It is also known as Basolite®C 300. The material is characterized by a cubic lattice with three-dimensional pores with 9x9 Å diameter and is used as an effective hydrogen storage material. UiO-66 and UiO-66-$NH_2$ are zirconium-based cubic frameworks made up by octahedral and tetrahedral cages with high thermal and chemical stability.

The rate of chemical reactions can be written as a function of the rate coefficient $k_r$, which is temperature-dependent as it is described by the Arrhenius equation:

$$k_r \ = \ A \ exp\,(E_A/R \ T)$$

with the pre-exponential factor A, the activation energy $E_A$, the universal gas constant $R$ and the temperature $T$. A reaction takes place if the energy barrier is overcome by adding enough energy to the system. Furthermore, the reaction rate typically increases as the temperature increases. In general, a system is heated through heat transfer with e.g. an oil bath or heating jacket, which is a slow and inefficient procedure, as the system is heated from the outside. As a result the walls and the liquids in contact with it are heated first.

An alternative to this conventional method is heating by microwave irradiation. Microwaves are generated by one or more magnetrons and are transmitted to an antenna from where they are dispersed in the cavity of the hardware and interact with the sample. Therefore, microwave-assisted heating is an advantageous method as it heats more efficiently resulting in shorter heating times and therefore in lower operating and production costs. US Patent Application 20070012183 describes a semi-continuous way of the producing the MOF materials but the method disclosed does not work in a continuous flow mode. It is rather a semi-batch or stop-flow mode. Basically, a batch reactor is provided in which reactants are pumped in - reacted with microwave in a stirred batch reactor- and the products pumped out when the reaction is finished.

It is therefore the objective of the present invention to provide a method for the production of MOF materials where the production can be achieved without interrupting the supply of the raw materials and waiting for the reaction to happen in the batch reactor prior to introducing new reactants. The method shall exhibit low reaction times giving a high space-time yield, which could be applied in the big-scale production of metal-organic frameworks and covalent-organic frameworks.

These objectives are achieved according to the present invention by a method for producing a metal organic framework or a covalent organic framework, comprising the steps of:

a) preparing stock solutions of the precursor components of the metal or covalent organic framework;
b) pumping the stock solutions into a static mixer in order to achieve a reaction mixture, such as a liquid or a suspension;
c) conveying the reaction mixture continuously into a reaction chamber having a reaction path;
d) heating the reaction mixture in the continuous flow reactor by microwave irradiation that is subjected to the reaction mixture along the reaction path in order to induce the reaction of the precursor components to the desired metal or covalent organic framework;
e) continuously drawing the so-generated metal or covalent organic framework from the reaction chamber; and
f) separating the so-generated metal or covalent organic framework from unreacted remaining reaction mixture.

The method now yields rather low reaction times thereby offering high space-time yield which will enable the big-scale production of metal-organic frameworks as shown in the examples below.

Typically, the precursor components are mixed with a co-solvent and/or additive such as acids and/or water. Advantageously, the reaction mixture comprises a soluble metal component, an organic linker and a solvent.

In order to realize a reaction path having a good trade-off of the heat introduced by the microwave irradiation into the reaction mixture and the through-put continuously achievable, the reaction path may be designed as a tube that is at least partially transparent for microwave irradiation.

In order to improve the process efficiency, the unreacted remaining reaction mixture can be recycled into the reaction chamber. Additionally or alternatively, the separated metal organic frameworks may be cooled while transferring the recovered heat to the reaction mixture.

Advantageous reaction conditions can be established when the ratio of the flow rate of the reaction mixture to the volume of the reaction path ranges from 0.1 min$^{-1}$ to 60 min$^{-1}$, preferably from 2 min$^{-1}$ to 30 min$^{-1}$. Additionally or alternatively, the ratio of the microwave irradiation power to the flow rate of the reaction mixture may range from 1x10$^{-5}$ Ws/mL to 100 kWs/mL.

Preferably, the process efficiency can be further increased when the pressure in the reaction chamber is in a range up to 20 bar.

Preferred embodiments of the present invention are hereinafter explained with reference to the attached drawings which depict in:

Figure 1    schematically a setup for the continuous microwave-assisted synthesis of metal-organic frameworks;

Figure 2    schematically a control panel of the pump control;

Figure 3    nitrogen adsorption isotherms of HKUST-1 MIL-101 - (Al)-NH2, MIL-53, and UiO-66;

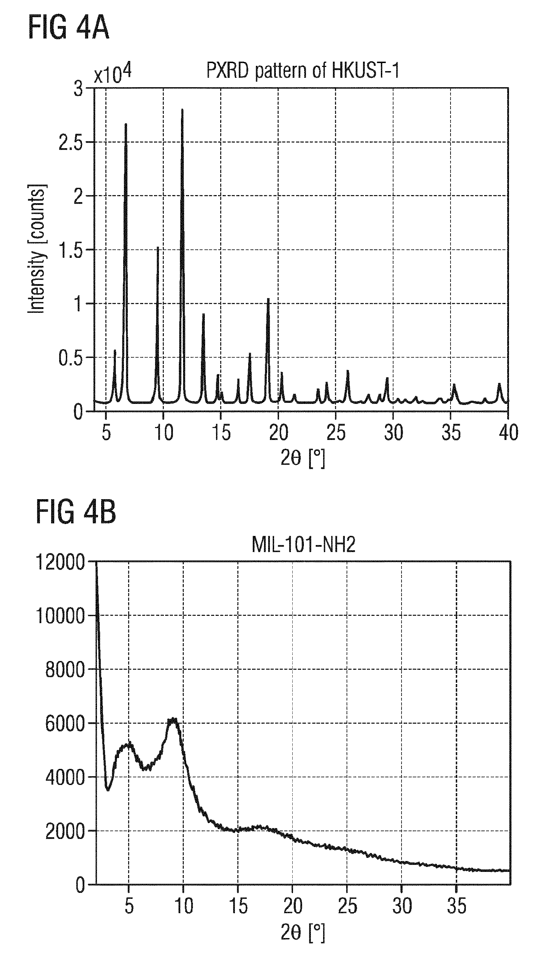

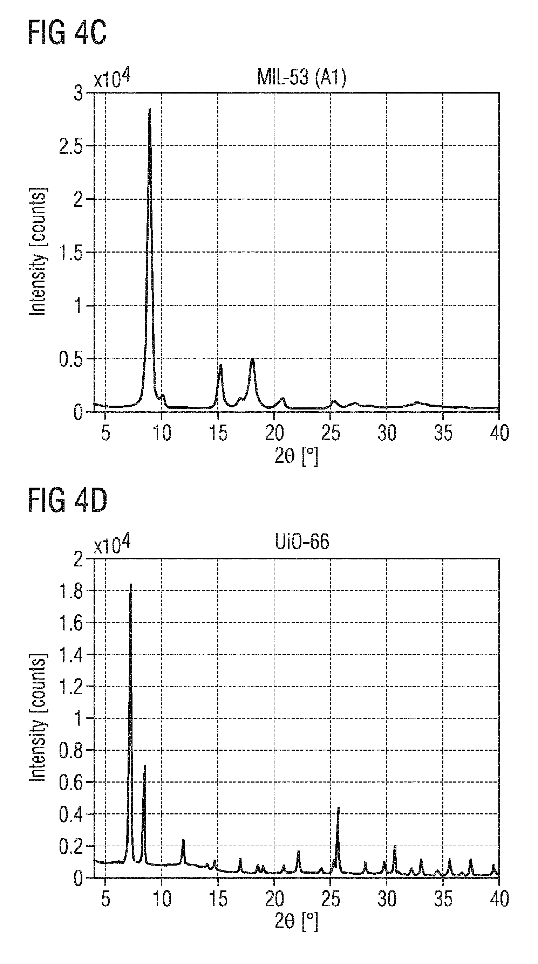

Figure 4    powder XRD patterns of the samples HKUST-1, MIL-101 -(Al)-NH2, MIL-53, and UiO-66;

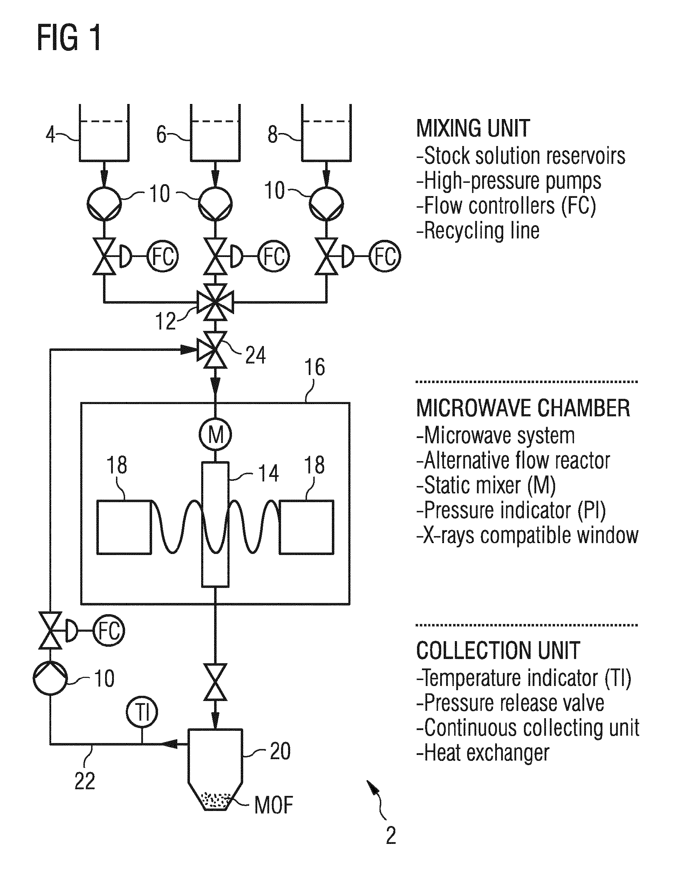

The equipment setup 2 for the continuous synthesis of MOFs is shown in figure 1. Reactants, additives and solvents were stored in different stock solution reservoirs 4 to 8, from which HPLC pumps 10 (Knauer Azura P 4.1S) pumped the liquids through back pressure regulators (BPR Assembly PEEK 500 psi) to a mixing unit 12, where all separated liquid flows were merged together in order to build a reaction mixture, such a a liquid or a suspension. After the mixing unit 12, the reaction liquid was heated in a tube 14 of a reaction chamber 16 (Tefzel Natural 1/8"x 0.062") with a microwave CEM MARS and retrieved in a collector 20 where the generated solid metal organic framework MOF is separated from the remaining reaction liquid. From the collector 20, a recycling line 22 leads via a pump 10 incl. controller to a second mixing unit 24 in order to recycle the reaction mother liquor.

The collected solid product can be separated in a centrifuge from the mother liquor and washed with different solvent and boiled in a solvent during 30 minutes for work-up. The samples were dried in a vacuum oven after work-up.

The dried samples were activated in a degasser (micromeritics VacPrep 061 Sample Degas System) and nitrogen adsorption isotherms were measured (micromeritics TriStar II 300 Surface Area and Porosity) for determination of the specific surface area. BET specific surface areas were calculated in a relative pressure range of $p/p^0 = 0.01$ to 0.042.

The setup was washed after each MOF with water, followed by a 1 M sodium hydroxide solution and 50 % acetic acid solution and finally flushed with sufficient amount of water.

A pump control was programmed using LABVIEW® in order to control all three HPLC pumps 10 at the same time. The pumps 10 were connected with LAN cables via a router to a laptop computer. After selecting the right IP-addresses for each pump, the flow rates for each pump could be set in a range of 0 to 10 mL/min and a time period could be chosen. Moreover, different flow gradients were possible, e.g. for flushing or cleaning purposes.

The program would start all pumps at the same time and run them at their assigned flow rates during the given time period and then change to the next flow rates. After the given time periods, the program would stop all pumps. An emergency button was included to stop the pumps at any given time.

Screening of four different MOFs was performed to study the potential of microwave-assisted MOF synthesis. The experiments considered only the parameters residence time, by varying the reactor length or flow rates, the power of the microwave, different solvents and additives. The example below show the synthesis of high quality MOFs with four different topologies: MIL-101 (Al), HKUST-1, MIL-53, and UiO-66.

Example 1. Synthesis of HKUST-1

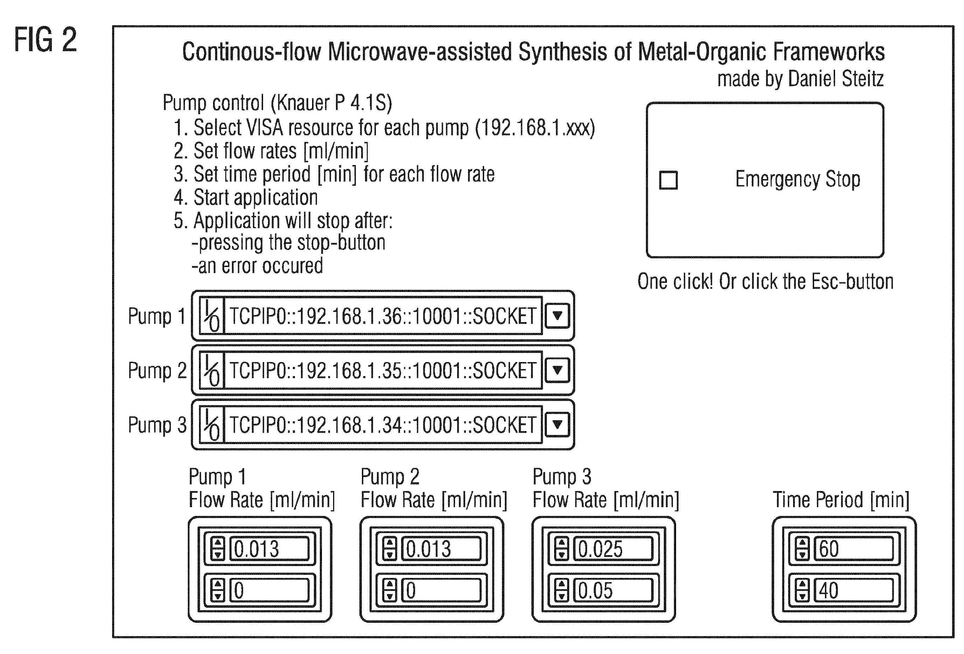

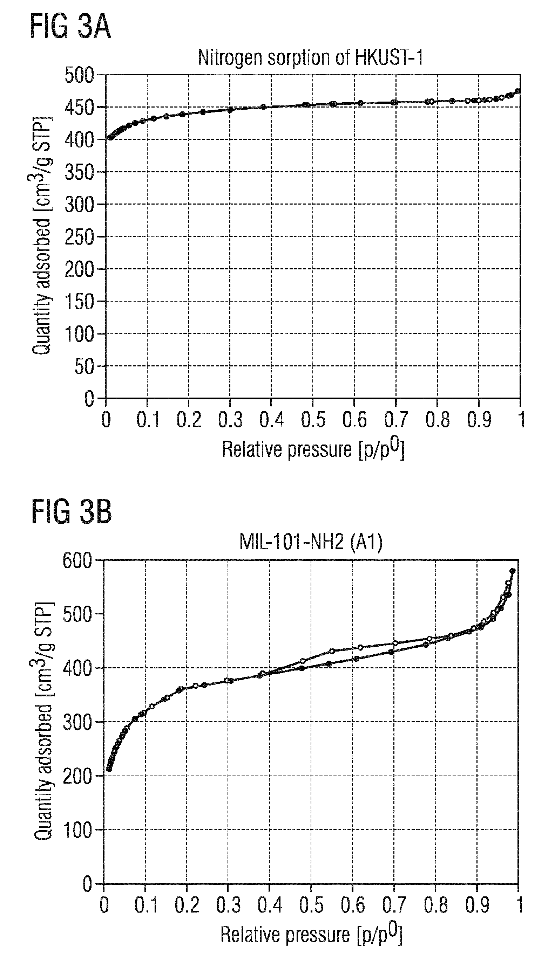

A stock solution of copper (II) nitrate trihydrate (4.35 g) in DMF (80 mL) was connected to pump 1. Pump 2 was connected to a stock solution of benzene-1,3,5-tricarboxylic acid (5.04 g) in DMF (80 mL). Pump 3 was connected to pure DMF. The pumps mixed at a static mixer and ran into the microwave reactor through a Teflon tube (37 cm length, 4 mm internal diameter) inside the microwave. The reactor volume was 4.7 mL. Initially pumps 1 and 2 ran at 2 mL/min for 1 min to bring the mixture up to just before the reactor, then the microwave was started and both pumps ran at 2.35 mL/min for 4.25 mins. Subsequently, the DMF pump ran at 4.7 ml/min for 2 mins to push the rest of the solution through the microwave. The residence time was 1 minute. The total microwave run time was 6.25 minutes at 560 W. A total of 20 mL of reaction solution were processed. The solution was air cooled and collected after microwave irradiation. The resulting suspension was washed and centrifuged with DMF (1 x 20 ml) and ethanol (3 x 20 ml), boiled in a 50/50 ethanol/acetone mixture for 1 hour and dried overnight in a vacuum oven at 70 °C. Yield: 0.187 g. STY: 13493 kg·d$^{-1}$·m$^{-3}$. BET: 1742 m$^2$·g$^{-1}$(Adsorption isotherm: Figure 2a, XRD: Figure 3a).

Example 2. Synthesis of MIL-101-NH$_2$(Al)

A solution of aluminium chloride hexahydrate (1.50 g) and 2-aminoterephthalic acid (2.25 g) in dry DMF (90 mL) was connected to pump 1. Pump 2 was connected to pure dry DMF. Both pumps mixed at a T junction and ran into the microwave reactor through a Teflon tube (36 cm, 6 mm outer diameter) inside the microwave. The reactor volume was 4.5 mL. Initially both pumps ran at 1.28 ml/min for 1 min to bring the mixture up to just before the reactor, then the microwave was started and both pumps ran at 0.375 ml/min for 27 min. Subsequently, the DMF pump ran at 0.75 ml/min for 20 min to push the rest of the solution through the microwave. The residence time was 4 mins. The total microwave run time was 47 minutes at 400 W. The solution was cooled and collected after microwave irradiation. The resulting suspension was washed and centrifuged with DMF (3 x 30 ml) and ethanol (3 x 30 ml), boiled in Ethanol overnight dried in a vacuum oven at 70 °C. Yield: 0.103 g. STY: 702 kg·d$^{-1}$·m$^{-3}$. BET: 2318 m$^2$·g$^{-1}$ (Adsorption isotherm: Figure 2b, XRD: Figure 3b).

Example 3. MIL-53-(Al)

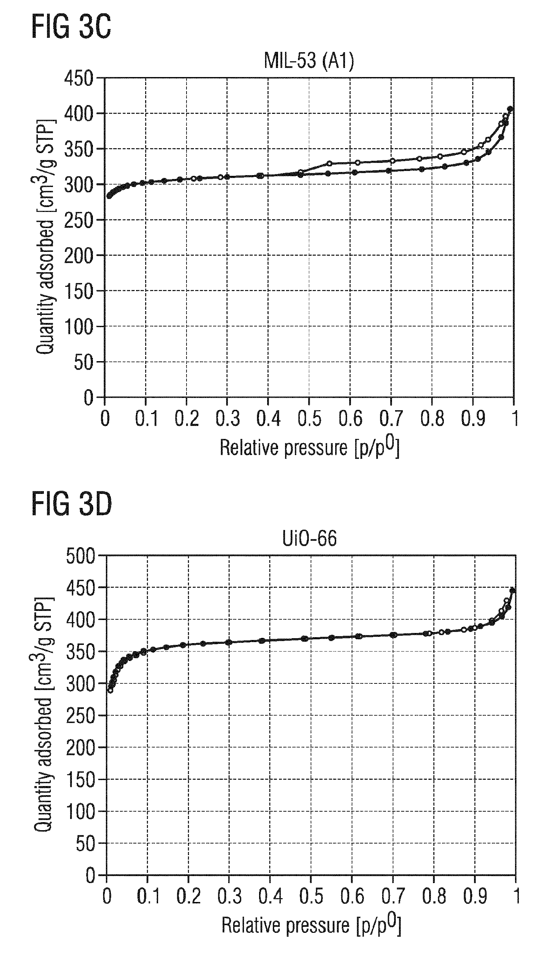

A solution of aluminum chloride hexahydrate (2.70 g) in DMF (80 mL) was connected to pump 1. A solution of terephthalic acid (1.88 g) in DMF (80 mL) was connected to pump 2. Pump 3 was connected to pure DMF. The pumps mixed at a static mixer and ran into the microwave reactor through a Teflon tube (37 cm length, 4 mm internal diameter) inside the microwave. The reactor volume was 4.7 mL. Initially pumps 1 and 2 ran at 2 mL/min for 1 min to bring the mixture up to just before the reactor, then the microwave was started and both pumps ran at 1.18 mL/min for 8 min. Subsequently, the DMF pump ran at 2.36 mL/min for 4 min to push the rest of the solution through the microwave. The residence time was 2 min. The total microwave run time was 12 minutes at 160 W. A total of 20 mL of reaction solution were processed. The solution was air cooled and collected after microwave irradiation. The resulting suspension was washed and centrifuged with DMF (1 x 10 ml) and ethanol (3 x 10 ml). The solid was then calcined at 300 °C for 1 hour to remove residual ligand trapped inside the framework. Yield: 0.099 g. STY: 3532 kg·d$^{-1}$·m$^{-3}$. BET: 1236 m$^2$·g$^{-1}$(Adsorption isotherm in Figure 2c XRD: Figure 3c).

Example 3. UiO-66

A solution of zirconium chloride (2.80 g), acetic acid (20 mL) and water (1.4 mL) in DMF (58 mL) was connected to pump 1. A solution of terephthalic acid (3.99 g) in DMF (80 mL) was connected to pump 2. Pump 3 was connected to pure DMF. The pumps mixed at a static mixer and ran into the microwave reactor through a Teflon tube (37 cm length, 4 mm internal diameter) inside the microwave. The reactor volume was 4.7 mL. Initially pumps 1 and 2 ran at 2 mL/min for 1 min to bring the mixture up to just before the reactor, then the microwave was started and pumps 1 and 2 ran at 0.45 mL/min and 0.22 mL/min, respectively, for 30 min. Subsequently, the DMF pump ran at 0.67 mL/min for 15 min to push the rest of the solution through the microwave. The residence time was 7 min. The total microwave run time was 45 minutes at 280 W. A total of 20 mL of reaction solution were processed. The solution was air cooled and collected after microwave irradiation. The resulting suspension was washed and centrifuged with DMF (1 x 10 ml), soaked in DMF for 12 hours (2 x 10 mL), washed and centrifuged with acetone (2 x 10 ml), soaked in acetone for 24 hours (1 x 10 mL), and finally centrifuged. The solid was dried overnight in a vacuum oven at 70 °C. Yield: 0.319 g. STY: 3279 kg·d$^{-1}$·m$^{-3}$. BET: 1454 m$^2$·g$^{-1}$ (Adsorption isotherm in Figure 2d XRD: Figure 3d).

The feasibility to produce MOFs in a continuous microwave-assisted reactor has been demonstrated. Four MOFs could be synthesized by microwave heating with higher space-time yield than via conventional heating, but it is clear that this technology can be applied for the synthesis of numerous MOFs and COFs in fast times and high STY. The most sensitive parameters seem to be the residence time and concentration, which influence yield and the sample quality.

References

[1]

(a) Kitagawa, S.; Kitaura, R.; Noro, S. Angew. Chemie Int. Ed. 2004, 43, 2334-2375.
(b) Férey, G. Chem. Soc. Rev. 2008, 37, 191-214.

[2] Cote, A. P.; Benin, A. I.; Ockwig, N. W.; O'Keeffe, M.; Matzger, A. J.; Yaghi, O. M. Science 2005, 310, 1166-1170.

[3]

(a) Li, J.-R.; Kuppler, R. J.; Zhou, H.-C. Chem. Soc. Rev. 2009, 38, 1477-1504.
(b) Ranocchiari, M.; van Bokhoven, J. A. Phys. Chem. Chem. Phys. 2011, 13, 6388-6396.

[4]

(a) Kleist, W.; Jutz, F.; Maciejewski, M.; Baiker, A. Eur. J. Inorg. Chem. 2009, 3552-3561.
(b) Deng, H.; Doonan, C. J.; Furukawa, H.; Ferreira, R. B.; Towne, J.; Knobler, C. B.; Wang, B.; Yaghi, O. M. Science 2010, 327, 846-850.

**Claims**

1.  A method for producing metal organic frameworks (MOF) or covalent organic frameworks (COF), comprising the steps of:

    a) mixing precursor components (4, 6, 8) of the metal or covalent organic framework in order to achieve a reaction mixture;
    b) conveying the reaction mixture continuously into a continuous flow reactor (16) having a reaction path (14);
    c) heating the reaction mixture in the continuous flow reactor by (16) microwave irradiation (18) that is subjected to the reaction mixture along the reaction path (14) in order to induce the reaction of the precursor components (4, 6, 8) to the desired metal or covalent organic framework; and
    d) continuously drawing the so-generated metal or covalent organic framework from the continuous flow reactor (16); and
    e) separating the so-generated metal or covalent organic framework from unreacted remaining reaction mixture.

2.  The method of claim 1, wherein the precursor components (4, 6, 8) are mixed with a co-solvent and/or acids solutions and/or water.

3.  The method of claim 1 or claim 2, wherein the reaction path (14) is designed as a tube that is at least partially transparent for microwave irradiation (18).

4.  The method of any of the preceding claims wherein the unreacted remaining reaction mixture is recycled into the reaction chamber (16).

5.  The method according to any of the preceding claims wherein the separated metal or covalent organic framework is cooled while transferring the recovered heat to the reaction mixture.

6.  The method according to any of the preceding claims wherein the ratio of the flow rate of the reaction liquid to the volume of the reaction path (14) ranges from 0.1 min$^{-1}$ to 60 min$^{-1}$, preferably from 2 min$^{-1}$ to 30 min$^{-1}$.

7.  The method according to any of the preceding claims wherein the ratio of the microwave irradiation power to the flow rate of the reaction liquid ranges from 1x10$^{-5}$ Ws/ml to 100 kWs/ml.

8.  The method according to any of the preceding claims, wherein the reaction mixture comprises a soluble metal component, an organic linker and a solvent.

# FIG 1

MIXING UNIT
-Stock solution reservoirs
-High-pressure pumps
-Flow controllers (FC)
-Recycling line

MICROWAVE CHAMBER
-Microwave system
-Alternative flow reactor
-Static mixer (M)
-Pressure indicator (PI)
-X-rays compatible window

COLLECTION UNIT
-Temperature indicator (TI)
-Pressure release valve
-Continuous collecting unit
-Heat exchanger

# FIG 2

## Continous-flow Microwave-assisted Synthesis of Metal-Organic Frameworks

made by Daniel Steitz

Pump control (Knauer P 4.1S)
1. Select VISA resource for each pump (192.168.1.xxx)
2. Set flow rates [ml/min]
3. Set time period [min] for each flow rate
4. Start application
5. Application will stop after:
   -pressing the stop-button
   -an error occured

☐ Emergency Stop

One click! Or click the Esc-button

| Pump 1 | TCPIP0::192.168.1.36::10001::SOCKET ▼ |
| Pump 2 | TCPIP0::192.168.1.35::10001::SOCKET ▼ |
| Pump 3 | TCPIP0::192.168.1.34::10001::SOCKET ▼ |

Pump 1
Flow Rate [ml/min]

Pump 2
Flow Rate [ml/min]

Pump 3
Flow Rate [ml/min]

Time Period [min]

| Pump 1 | Pump 2 | Pump 3 | Time Period |
|--------|--------|--------|-------------|
| 0.013  | 0.013  | 0.025  | 60          |
| 0      | 0      | 0.05   | 40          |

EP 3 006 104 A1

## FIG 3A

Nitrogen sorption of HKUST-1

## FIG 3B

MIL-101-NH2 (A1)

FIG 3C

MIL-53 (A1)

FIG 3D

UiO-66

FIG 4A

PXRD pattern of HKUST-1

FIG 4B

MIL-101-NH2

## FIG 4C

MIL-53 (A1)

## FIG 4D

UiO-66

Europäisches
Patentamt

European
Patent Office

Office européen
des brevets

# EUROPEAN SEARCH REPORT

Application Number

EP 15 16 5723

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/013274 A2 (UNIV NOTTINGHAM [GB]) 23 January 2014 (2014-01-23) <br> * page 2, paragraph 4th - paragraph 6th * <br> * page 4, paragraph 4th * <br> * page 5, paragraph 2nd * <br> * page 5, last paragraph * <br> * page 8, last paragraph - page 9, paragraph 1st * <br> * page 12, paragraph 2nd * <br> * page 17, last paragraph - page 18, paragraph 2nd * <br> * page 22, paragraph 1st * <br> * figure 1 * <br> ----- | 1-8 | INV. <br> B01J20/22 <br> B01J20/30 |
| X | WO 2014/066415 A2 (TEXAS A & M UNIV SYS [US]) 1 May 2014 (2014-05-01) <br> * page 9, line 8 - line 19 * <br> * figures 3,4 * <br> * page 9, line 25 - line 35 * <br> ----- | 1-8 | |
| X | WO 2007/102676 A1 (KOREA RES INST CHEM TECH [KR]; CHANG JONG-SAN [KR]; JHUNG SUNG-HWA [KR) 13 September 2007 (2007-09-13) <br> * page 9, line 10 - line 18 * <br> * page 10, line 1 - line 5 * <br> * page 14, line 3 - line 5 * <br> * page 14, line 13 - line 15 * <br> * page 14, line 19 - line 20 * <br> * example 3 * <br> * page 15, line 15 - page 16, line 9 * <br> ----- | 1-4,8 | TECHNICAL FIELDS SEARCHED (IPC) <br><br> B01J |
| X | US 2007/014715 A1 (CHANG JONG-SAN [KR] ET AL) 18 January 2007 (2007-01-18) <br> * claim 1 * <br> * figures 1,2 * <br> * paragraphs [0011], [0012], [0016], [0020], [0021], [0024], [0025] * <br> ----- | 1-6,8 | |

-/--

The present search report has been drawn up for all claims

| Place of search | Date of completion of the search | Examiner |
|---|---|---|
| The Hague | 12 February 2016 | Kaluza, Nicoleta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Prof. Van Bokhoven: "ETH Zurich - D CHAB - ICB - van Bokhoven Microwave Reactors", , 9 August 2013 (2013-08-09), XP055184554, Retrieved from the Internet: URL:http://www.vanbokhoven.ethz.ch/infrastructure/MicrowaveReactor [retrieved on 2015-04-21] * the whole document * | 1-8 | |
| A | EP 0 522 828 A1 (CEM CORP [US]) 13 January 1993 (1993-01-13) * page 6, line 48 - page 7, line 4 * | 1-8 | |

TECHNICAL FIELDS
SEARCHED     (IPC)

The present search report has been drawn up for all claims

| Place of search | Date of completion of the search | Examiner |
|---|---|---|
| The Hague | 12 February 2016 | Kaluza, Nicoleta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 16 5723

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2016

| Patent document cited in search report | | Publication date | Patent family member(s) | | | Publication date |
|---|---|---|---|---|---|---|
| WO 2014013274 | A2 | 23-01-2014 | GB | 2519050 | A | 08-04-2015 |
| | | | US | 2015175518 | A1 | 25-06-2015 |
| | | | WO | 2014013274 | A2 | 23-01-2014 |
| WO 2014066415 | A2 | 01-05-2014 | CN | 105050699 | A | 11-11-2015 |
| | | | US | 2015246318 | A1 | 03-09-2015 |
| | | | WO | 2014066415 | A2 | 01-05-2014 |
| WO 2007102676 | A1 | 13-09-2007 | KR | 100695473 | B1 | 16-03-2007 |
| | | | WO | 2007102676 | A1 | 13-09-2007 |
| US 2007014715 | A1 | 18-01-2007 | KR | 20070008942 | A | 18-01-2007 |
| | | | US | 2007014715 | A1 | 18-01-2007 |
| EP 0522828 | A1 | 13-01-1993 | CA | 2073201 | A1 | 11-01-1993 |
| | | | DE | 69222368 | D1 | 30-10-1997 |
| | | | DE | 69222368 | T2 | 19-03-1998 |
| | | | EP | 0522828 | A1 | 13-01-1993 |
| | | | JP | 3359052 | B2 | 24-12-2002 |
| | | | JP | H06258207 | A | 16-09-1994 |
| | | | US | 5215715 | A | 01-06-1993 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20070012183 A

### Non-patent literature cited in the description

- **KITAGAWA, S. ; KITAURA, R. ; NORO, S.** *Angew. Chemie Int. Ed.,* 2004, vol. 43, 2334-2375
- **FÉREY, G.** *Chem. Soc. Rev.,* 2008, vol. 37, 191-214
- **COTE, A. P. ; BENIN, A. I. ; OCKWIG, N. W. ; O'KE-EFFE, M. ; MATZGER, A. J. ; YAGHI, O. M.** *Science,* 2005, vol. 310, 1166-1170
- **LI, J.-R. ; KUPPLER, R. J. ; ZHOU, H.-C.** *Chem. Soc. Rev.,* 2009, vol. 38, 1477-1504
- **RANOCCHIARI, M. ; VAN BOKHOVEN, J. A.** *Phys. Chem. Chem. Phys.,* 2011, vol. 13, 6388-6396
- **KLEIST, W. ; JUTZ, F. ; MACIEJEWSKI, M. ; BAIKER, A.** *Eur. J. Inorg. Chem.,* 2009, 3552-3561
- **DENG, H. ; DOONAN, C. J. ; FURUKAWA, H. ; FERREIRA, R. B. ; TOWNE, J. ; KNOBLER, C. B. ; WANG, B. ; YAGHI, O. M.** *Science,* 2010, vol. 327, 846-850